# EUROPEAN PATENT APPLICATION

(11) **EP 4 657 237 A1**
(43) Date of publication of application: **03.12.2025**
(21) Application number: 24838307.7
(22) Date of filing: 29.02.2024
(51) Int. Cl.: G06F 3/14

(54) **IMAGE DISPLAY METHOD, ELECTRONIC DEVICE, STORAGE MEDIUM, AND CHIP**

(30) Priority: 12.07.2023 CN 202310859351
(71) Applicant: Honor Device Co., Ltd., Shenzhen, Guangdong 518040 (CN)
(72) Inventor: CHENG, Long, Shenzhen, Guangdong 518040 (CN)
(74) Representative: MERH-IP Matias Erny Reichl Hoffmann Patentanwälte PartG mbB
(86) International application number: PCT/CN2024/079453
(87) International publication number: WO 2025/011046

(57) **Abstract**

This application relates to the field of image processing technologies, and provides an image presentation method, an electronic device, a storage medium, and a chip. The method may include: After an upper-layer application completes drawing a buffer, SurfaceFlinger (SF) does not need to wait for a Vsync signal, but immediately composes the buffer drawn by the upper-layer application, and a display driver sends the composed buffer to a display for display after receiving the Vsync signal. To avoid accumulation of the composed buffer, the method may further include: After the upper-layer application completes drawing the buffer, when a composed buffer has not yet been displayed, the SF stops a current composition and disables the Vsync signal sent to the SF. In addition, the SF takes the latest buffers for composition and discards the older buffers when composing buffers. This method can reduce a delay of content displayed on the display.

## Description

This application claims priority to Chinese Patent Application No. 202310859351.7, filed with the China National Intellectual Property Administration on July 12, 2023 and entitled "IMAGE PRESENTATION METHOD, ELECTRONIC DEVICE, STORAGE MEDIUM, AND CHIP", which is incorporated herein by reference in its entirety.

### TECHNICAL FIELD

This application relates to the field of image processing technologies, and in particular, to an image presentation method, an electronic device, a storage medium, and a chip.

### BACKGROUND

With the increasing intelligence of an electronic device, the electronic device can also provide increasingly more functions. For example, some applications installed in an electronic device may provide a handwriting function. The handwriting function may allow the user to perform a handwriting operation on a display of the electronic device through a stylus, and may further allow the user to perform a handwriting operation on the display of the electronic device through a finger.

An important indicator of the handwriting function of the electronic device includes a touch delay, that is, a time delay from a handwriting trajectory of the user on the display of the electronic device to handwriting being displayed in a region corresponding to the handwriting trajectory. Currently, the touch delay of the handwriting function of the electronic device is relatively long, resulting in a poor handwriting experience of the user.

### SUMMARY

This application provides an image presentation method, an electronic device, a storage medium, and a chip, so as to reduce a touch delay of a handwriting function of the electronic device and improve user experience.

To achieve the foregoing objectives, in a first aspect of this application, the following technical solutions are adopted.

A first application receives a first Vsync signal.

The first application draws a first buffer in response to the first Vsync signal.

After the first application completes drawing the first buffer, the first application stores the first buffer in a first storage space, and the first application sends a first composition instruction to SurfaceFlinger.

The SurfaceFlinger retrieves a second buffer from the first storage space in response to the first composition instruction.

The SurfaceFlinger composes the second buffer.

A display driver receives a second Vsync signal.

The display driver sends the second buffer to a display in response to the second Vsync signal. The second Vsync signal and the first Vsync signal are two adjacent Vsync signals, and the second Vsync signal is later than the first Vsync signal.

In this application, through a manner of sending a composition instruction to the SurfaceFlinger after the first application completes drawing the buffer, the SurfaceFlinger does not need to wait until the next Vsync signal arrives before performing buffer composition, thereby shortening a duration from drawing to composition (or presentation) of the buffer. This may reduce the touch delay in a stylus application when applied to an application with a handwriting function.

In addition, during the image presentation, the buffer drawn by the first application may be an image frame. In other words, the first buffer and the second buffer in this application may be a first image frame and a second image frame.

In an implementation of the first aspect, the first buffer and the second buffer are a same buffer.

In this application, the first buffer and the second buffer may be the same buffer. In other words, after drawing and obtaining the first buffer, the first application sends a composition instruction to SurfaceFlinger. The SurfaceFlinger may compose the buffer that has just been drawn, thereby shortening a time from drawing to composition (presentation) of the same buffer, and reducing the touch delay of the stylus application.

In addition, it should be noted that the process of composing the first buffer by the SurfaceFlinger after the first application draws the first buffer is to compose the first buffer and a buffer of another application (for example, a status bar). For convenience of description, since the composed buffer is still related to the first buffer, the image frame obtained after the SurfaceFlinger composes the first buffer may also be denoted as the first buffer. The naming of other buffers is similar.

In another implementation of the first aspect, in a case that the first buffer and the second buffer are the same buffer, the method further includes:

The SurfaceFlinger retrieves a third buffer from the first storage space in response to the first composition instruction, where a storage time of the third buffer in the first storage space is earlier than a storage time of the first buffer in the first storage space.

In this application, in a case that not only the first buffer that has just been drawn is stored in the first storage space, but also a third buffer stored earlier than the first buffer is present, the SurfaceFlinger needs to retrieve the most recently stored first buffer for composition and clear the first storage space, that is, retrieve and discard the third buffer. Certainly, if another buffer is further present in the first storage space that is stored earlier than the first buffer, buffers except the first buffer need to be discarded. Such a process of discarding old buffers and composing a new buffer avoids delayed composition and presentation caused by buffer accumulation. Therefore, the touch delay maybe reduced.

In another implementation of the first aspect, when the first buffer and the second buffer are not the same buffer, the method further includes:

The SurfaceFlinger retrieves the first buffer from the first storage space in response to the first composition instruction.

In this application, the process of composing the buffer by the SurfaceFlinger after retrieving the buffer from the first storage space may also be retrieving the buffer that is stored latest for composition and discarding other buffers. In this way, after the other buffers are discarded, the first storage space is also cleared, and the touch delay may also be reduced.

Certainly, in an actual application, if more buffers are stored in the first storage space, any one of the buffers may also be retrieved for composition, and the other buffers are discarded, so that the touch delay may also be reduced.

In another implementation of the first aspect, before the first application receives the first Vsync signal, the method further includes:

The first application receives a second Vsync signal, where the second Vsync signal is a previous Vsync signal of the first Vsync signal.

The first application draws the third buffer in response to the second Vsync signal.

After the first application completes drawing the third buffer, the first application stores the third buffer in the first storage space, and the first application sends a second composition instruction to the SurfaceFlinger.

In a case that a fourth buffer is stored in a second buffer space, the SurfaceFlinger skips composing the third buffer in response to the second composition instruction, and a Vsync thread stops sending a next Vsync signal to the SurfaceFlinger.

In this application, in a case that there is still a buffer in the second storage space that has not been presented, the SurfaceFlinger may stop the current process of buffer composition after receiving the composition instruction, and the Vsync thread (a user sends a Vsync signal) may further stop a process of sending a Vsync signal to the SurfaceFlinger once. In this way, the buffer that may be accumulated in the second storage space may be accumulated in the first storage space, and when the first application composes the buffer, the accumulated buffers are cleared, thereby reducing the touch delay.

In another implementation of the first aspect, before the first application receives the first Vsync signal, the method further includes:

The first application receives a second Vsync signal.

The first application draws the third buffer in response to the second Vsync signal.

The first application stores the third buffer in the first storage space after the first application completes drawing the third buffer, and in a case that a fourth buffer is stored in a second buffer space, the first application stops sending a second composition instruction to the SurfaceFlinger this time, and a Vsync thread stops sending a next Vsync signal to the SurfaceFlinger, where the next Vsync signal of the second Vsync signal is the first Vsync signal.

In this application, in a case that the fourth buffer is stored in the second buffer space, the first application stops sending the second composition instruction to the SurfaceFlinger this time, so that the SurfaceFlinger stops a process of buffer composition once. Certainly, the Vsync thread (configured to send a Vsync signal) may further stop a process of sending a Vsync signal to the SurfaceFlinger once. In this way, the buffer that may be accumulated in the second storage space may be accumulated in the first storage space, and when the first application composes the buffer, the accumulated buffers are cleared, thereby reducing the touch delay.

In another implementation of the first aspect, before the first application receives the second Vsync signal, the method further includes:

The first application receives a third Vsync signal, where the third Vsync signal is a previous signal of the second Vaync signal.

The first application draws the fourth buffer in response to the third Vsync signal.

After the first application completes drawing the fourth buffer, the first application stores the fourth buffer in the first storage space, and the first application sends a third composition instruction to the SurfaceFlinger.

The SurfaceFlinger retrieves the fourth buffer from the first storage space in response to the third composition instruction.

The SurfaceFlinger composes the fourth buffer.

The SurfaceFlinger stores the fourth buffer in the second storage space after the SurfaceFlinger completes composition of the fourth buffer, where a moment when the SurfaceFlinger completes the composition of the fourth buffer is later than a moment corresponding to the second Vsync signal and earlier than a moment corresponding to the first Vsync signal.

In this application, there is a situation that may cause the buffer to accumulate in the second storage space. Since the moment when the SurfaceFlinger composes the buffer is later than the moment corresponding to the next Vsync signal and earlier than a moment corresponding to a Vsync signal after next, the buffer that may be presented through the next Vsync signal is not presented, leading to the accumulation of the buffer.

In another implementation of the first aspect, the first application is a stylus application.

In this application, the handwriting operation in the stylus application has a high requirement for the touch delay, that is, the touch delay should be as low as possible. Therefore, through this application, the touch delay of the stylus application may be shortened by approximately 1 Vsync signal cycle, thereby improving user experience.

According to a second aspect, an electronic device is provided, including a processor, and the processor is configured to invoke a computer program stored in a memory to implement the method according to any one of the first aspect of this application.

According to a third aspect, a chip is provided, including a processor. The processor is coupled to a memory, and the processor is configured to execute a computer program stored in the memory, to implement the method according to any one of the first aspect of this application.

According to a fourth aspect, a computer-readable storage medium is provided. The computer-readable storage medium stores a computer program, and the computer instruction, when run on an electronic device, causes the electronic device to implement the method according to any one of the first aspect of this application.

According to a fifth aspect, an embodiment of this application provides a computer program product. The computer program product, when run on a device, causes the device to perform the method according to any one of the first aspect of this application.

It may be understood that for beneficial effects of the second aspect to the fifth aspect, reference may be made to the related description in the foregoing first aspect. Details are not described herein again.

### BRIEF DESCRIPTION OF DRAWINGS

FIG. 1 is a schematic diagram of a hardware structure of an electronic device according to an embodiment of this application;
FIG. 2 is a schematic diagram of a handwriting scenario according to an embodiment of this application;
FIG. 3 is a schematic diagram of a touch delay in a handwriting scenario according to an embodiment of this application;
FIG. 4 is a schematic diagram of a time relationship of an image presentation process corresponding to handwriting according to an embodiment of this application;
FIG. 5 is a schematic diagram of a time relationship of an image presentation process corresponding to another handwriting according to an embodiment of this application;
FIG. 6 is a schematic diagram of a time relationship of an image presentation process corresponding to another handwriting according to an embodiment of this application;
FIG. 7 is a schematic diagram of a time relationship of an image presentation process corresponding to another handwriting according to an embodiment of this application;
FIG. 8 is a schematic diagram of a time relationship of an image presentation process corresponding to another handwriting according to an embodiment of this application;
FIG. 9 is a schematic diagram of a process performed by a stylus application, SurfaceFlinger, and a display driver according to an embodiment of this application.

### DESCRIPTION OF EMBODIMENTS

In the following descriptions, specific details such as a particular system structure and technologies are provided for the purpose of description rather than limitation, to facilitate thorough understanding of embodiments of this application. However, a person skilled in the art should be aware that this application may also be implemented in another embodiment without these specific details.

It should be understood that, when used in the specification of this application and the appended claims, the term "include/comprise" indicates the presence of described features, integers, steps, operations, elements, and/or components, but does not exclude the presence or addition of one or more other features, integers, steps, operations, elements, components, and/or a set thereof.

It should be further understood that in embodiments of this application, "one or more" means one, two, or more than two. The term "and/or" is used to describe an association relationship between associated objects and represents that three relationships may exist. For example, A and/or B may represent the following cases: only A exists, both A and B exist, and only B exists, where A and B may be singular or plural. The character "/" generally indicates an "or" relationship between the associated objects.

In addition, in this specification and the appended claims of this application, the terms such as "first", "second", "third", and "fourth" are used only to distinguish descriptions, and should not be understood as indicating or implying relative importance.

Reference to "one embodiment" or "some embodiments" described in this specification of this application means that a particular feature, structure, or characteristic described in combination with the embodiment is included in one or more embodiments of this application. Therefore, statements such as "in one embodiment", "in some embodiments", "in some other embodiments", and "in some additional embodiments" in the differences in this specification do not necessarily refer to the same embodiment, but mean "one or more but not all embodiments", unless otherwise specially emphasized in another manner. Terms "comprise", "include", "have", and variations thereof all mean "including but not limited to", unless otherwise specially emphasized in another manner.

An embodiment of this application provides an image presentation method. The electronic device may be an electronic device such as a tablet computer, a mobile phone, a wearable device, a notebook computer, an ultra-mobile personal computer (ultra-mobile personal computer, UMPC), a netbook, a personal digital assistant (personal digital assistant, PDA), or the like. A specific type of the electronic device is not limited in embodiments of this application.

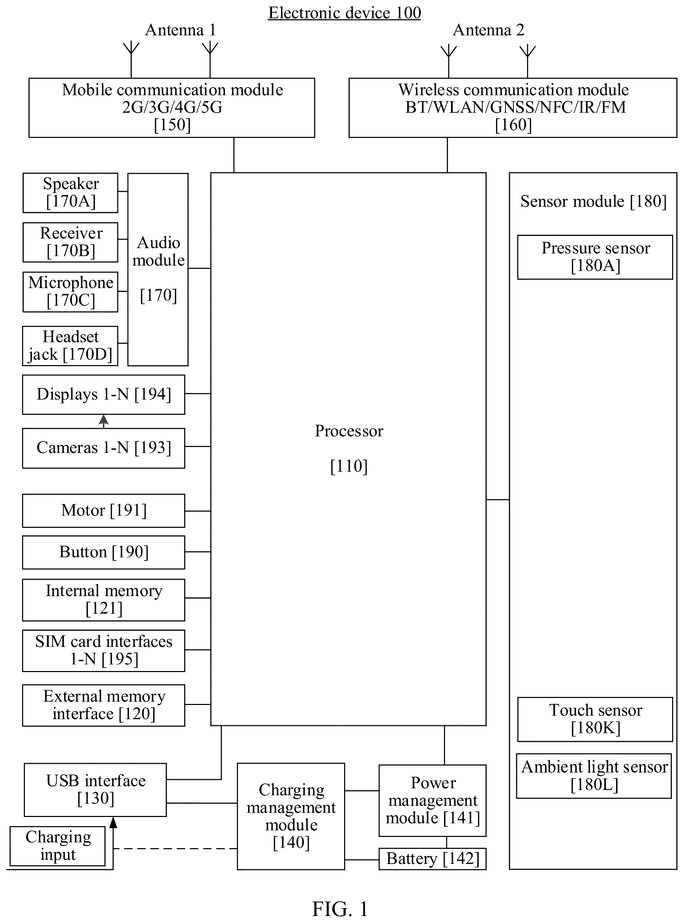

FIG. 1 shows a schematic structural diagram of an electronic device. An electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, a camera 193, a display screen 194, a subscriber identity module (subscriber identification module, SIM) card interface 195, and the like. The sensor module 180 may include a pressure sensor 180A, a touch sensor 180K, an ambient light sensor 180L, and the like.

It may be understood that an example structure in this embodiment of this application does not constitute a specific limitation on the electronic device 100. In some other embodiments of this application, the electronic device 100 may include more or fewer components than those shown in the figure, or some merged components, or some split components, or different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a sensor coprocessor (sensor coprocessor, SCP), a baseband processor, and/or a neural processing unit (neural-network processing unit, NPU). Different processing units may be independent devices, or may be integrated into one or more processors. For example, the processor 110 is configured to perform the image presentation method in embodiments of this application.

The controller may be a nerve center and a command center of the electronic device 100. The controller may generate an operation control signal based on an instruction operation code and a timing signal, and control obtaining and execution of an instruction.

A memory may be further arranged in the processor 110, which is configured to store an instruction and data. In some embodiments, the memory in the processor 110 is a cache memory. The memory may store the instruction or data that has just been used or recycled by the processor 110. If the processor 110 needs to use the instruction or the data again, the processor may directly invoke the instruction or the data from the memory. Repeated access is avoided, and waiting time of the processor 110 is reduced, thereby improving system efficiency.

The USB interface 130 is an interface that complies with the USB standard specification, and may be specifically a Mini USB interface, a Micro USB interface, a USB Type C interface, or the like. The USB interface 130 may be configured to connect to a charger to charge the electronic device 100, or may be configured to perform data transmission between the electronic device 100 and a peripheral device.

It may be understood that a schematic interface connection relationship between the modules in embodiments of this application is merely an example for description, and constitutes no limitation on the structure of the electronic device 100. In some other embodiments of this application, the electronic device 100 may also use an interface connection manner different from that in the foregoing embodiment, or use a combination of a plurality of interface connection manners.

The external memory interface 120 may be configured to connect to an external storage card such as a micro SD card, to expand a storage capacity of the electronic device 100. The external storage card communicates with the processor 110 through the external memory interface 120, to implement a data storage function. For example, files such as music and a video are stored into the external storage card.

The internal memory 121 may be configured to store computer-executable program code. The executable program code includes instructions. The processor 110 runs the instruction stored in the internal memory 121, to implement various functional applications and data processing of the electronic device 100. The internal memory 121 may include a program storage region and a data storage region. The program storage region may store an operating system, an application required by at least one function (such as a sound playback function and an image display function), and the like.

In addition, the internal memory 121 may include a high-speed random access memory, and may further include a non-volatile memory, for example, at least one magnetic disk storage device, a flash memory device, or a universal flash storage (universal flash storage, UFS).

The charging management module 140 is configured to receive a charging input from a charger. The charger may be a wireless charger, or may be a wired charger. In some embodiments of wired charging, the charging management module 140 may receive a charging input of a wired charger through the USB interface 130.

The power management module 141 is configured to connect to the battery 142, the charging management module 140, and the processor 110. The power management module 141 receives input from the battery 142 and/or the charging management module 140, and supplies power to the processor 110, the internal memory 121, the external memory, the display screen 194, the camera 193, the wireless communication module 160, and the like.

In some other embodiments, the power management module 141 may alternatively be arranged in the processor 110. In some other embodiments, the power management module 141 and the charging management module 140 may also be arranged in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be further multiplexed to increase a utilization rate of the antennas. For example, the antenna 1 may be multiplexed into a diversity antenna of a wireless local area network. In some other embodiments, the antenna may be used in combination with a tuning switch.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the processed electromagnetic wave to the modem processor for demodulation. The mobile communication module 150 may further amplify a signal modulated by the modem processor, and convert the signal into an electromagnetic wave through the antenna 1 for radiation.

The wireless communication module 160 may provide a solution to wireless communication including a wireless local area network (wireless local area networks, WLAN) (for example, a wireless fidelity (wireless fidelity, Wi-Fi) network), bluetooth (bluetooth, BT), a global navigation satellite system (global navigation satellite system, GNSS), frequency modulation (frequency modulation, FM), near field communication (near field communication, NFC), an infrared (infrared, IR) technology, and the like applied to the electronic device 100. The wireless communication module 160 may be one or more devices into which at least one communication processing module is integrated. The wireless communication module 160 receives an electromagnetic wave through the antenna 2, performs frequency modulation and filtering on the electromagnetic wave signal, and sends the processed signal to the processor 110. The wireless communication module 160 may further receive a to-be-sent signal from the processor 110, perform frequency modulation and amplification on the to-be-sent signal, and convert the to-be-sent signal into an electromagnetic wave through the antenna 2 for radiation.

In some embodiments, in the electronic device 100, the antenna 1 is coupled to the mobile communication module 150, and the antenna 2 is coupled to the wireless communication module 160, so that the electronic device 100 may communicate with a network and another device through a wireless communication technology.

The electronic device 100 may implement an audio function through the audio module 170, the speaker 170A, the receiver 170B, the microphone 170C, the headset jack 170D, the application processor, and the like, for example, music playback and recording.

The audio module 170 is configured to convert a digital audio signal into an analog audio signal output, and is also configured to convert an analog audio input into a digital audio signal. The audio module 170 may be further configured to encode and decode an audio signal. In some embodiments, the audio module 170 may be arranged in the processor 110, or some functional modules in the audio module 170 are arranged in the processor 110.

The speaker 170A, also referred to as a "horn", is configured to convert an electrical audio signal into a sound signal. Music may be listened to or a hands-free call may be answered through the speaker 170A in the electronic device 100.

The receiver 170B, also referred to as a "handset", is configured to convert an electrical audio signal into a sound signal. When the electronic device 100 is configured to answer a call or receive voice information, the receiver 170B may be put close to a human ear to receive a voice.

The microphone 170C, also referred to as a "voice tube" or "mike", is configured to convert a sound signal into an electrical signal. When making a call or transmitting voice information, a user may make a sound approaching the microphone 170C through a mouth of the user, to input a sound signal into the microphone 170C. At least one microphone 170C may be arranged in the electronic device 100. In some other embodiments, the electronic device 100 may be provided with two microphones 170C, which can not only monitor voice messages but also implement a noise reduction function. In some other embodiments, three, four, or more microphones 170C may be alternatively arranged in the electronic device 100, to collect a sound signal, implement noise reduction, recognize a sound source, implement a directional recording function, and the like. The headset jack 170D is configured to connect to a wired headset. The headset jack 170D may be a USB interface 130, or may be a 3.5 mm open electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be arranged in the display screen 194. There are many types of pressure sensors 180A, such as a resistive pressure sensor, an inductive pressure sensor, and a capacitive pressure sensor. The capacitive pressure sensor may be a parallel plate including at least two conductive materials. When a force is applied to the pressure sensor 180A, a capacitance between electrodes changes. The electronic device 100 determines a pressure strength based on a change in the capacitance. When a touch operation is performed on the display screen 194, the electronic device 100 detects a touch operation intensity through the pressure sensor 180A. The electronic device 100 may also calculate a touch position based on a detection signal of the pressure sensor 180A.

The touch sensor 180K is also referred to as a "touch panel". The touch sensor 180K may be arranged on the display screen 194. The touch sensor 180K and the display screen 194 form a touchscreen, which is also referred to as a "touch screen". The touch sensor 180K is configured to detect a touch operation performed on or near the touch sensor. The touch sensor may transfer the detected touch operation to the application processor to determine a touch event type. A visual output related to the touch operation may be provided through the display screen 194. In some other embodiments, the touch sensor 180K may alternatively be arranged on a surface of the electronic device 100 at a position different from that of the display screen 194.

The ambient light sensor 180L is configured to perceive ambient light brightness. The electronic device 100 may adaptively adjust a brightness of the display screen 194 based on the perceived ambient light brightness. The ambient light sensor 180L may also be configured to automatically adjust white balance during photographing. The ambient light sensor 180L may further cooperate with the optical proximity sensor 180G to detect whether the electronic device 100 is in a pocket to prevent an accidental touch.

The button 190 includes a power button, a volume button, and the like. The button 190 may be a mechanical button, or a touch button. The electronic device 100 may receive a button input, and generate a button signal input related to user setting and function control of the electronic device 100.

The motor 191 may generate a vibration prompt. The motor 191 may be used for an incoming call vibration prompt and a touch vibration feedback.

The electronic device 100 implements a display function through the GPU, the display screen 194, the application processor, and the like. The GPU is a microprocessor for image processing and connects the display screen 194 to the application processor. The GPU is configured to perform mathematical and geometric calculation, and is configured to perform graphics rendering. The processor 110 may include one or more GPUs that execute a program instruction to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-OLED, a quantum dot light emitting diode (quantum dot light emitting diodes, QLED), and the like. In some embodiments, the electronic device 100 may include 1 or N display screens 194, where N is a positive integer greater than 1.

The camera 193 is configured to capture a still image or a video. An optical image is generated for an object through the lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in standard formats such as RGB and YUV. In some embodiments, the electronic device 100 may include 1 or N cameras 193, where N is a positive integer greater than 1.

The SIM card interface 195 is configured to connect a SIM card. The SIM card may be inserted into the SIM card interface 195 or plugged from the SIM card interface 195, to come into contact with or be separated from the electronic device 100. The electronic device 100 may support 1 or N SIM card interfaces, where N is a positive integer greater than 1. The SIM card interface 195 may support a Nano SIM card, a Micro SIM card, a SIM card, or the like. A plurality of cards may be inserted into a same SIM card interface 195 simultaneously. The plurality of cards may be of a same type or different types. The SIM card interface 195 may also be compatible with different types of SIM cards. The SIM card interface 195 may also be compatible with an external memory card. The electronic device 100 interacts with a network through a SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

In embodiments of this application, the specific structure of the execution subject of the image presentation method is not particularly limited, as long as code recording an image presentation method according to an embodiment of this application may be run to perform communication according to an image presentation method provided in embodiments of this application. For example, the execution subject of the image presentation method provided in embodiments of this application may be a functional module in an electronic device capable of invoking and executing a program, or a communication apparatus applied in the electronic device, such as a chip.

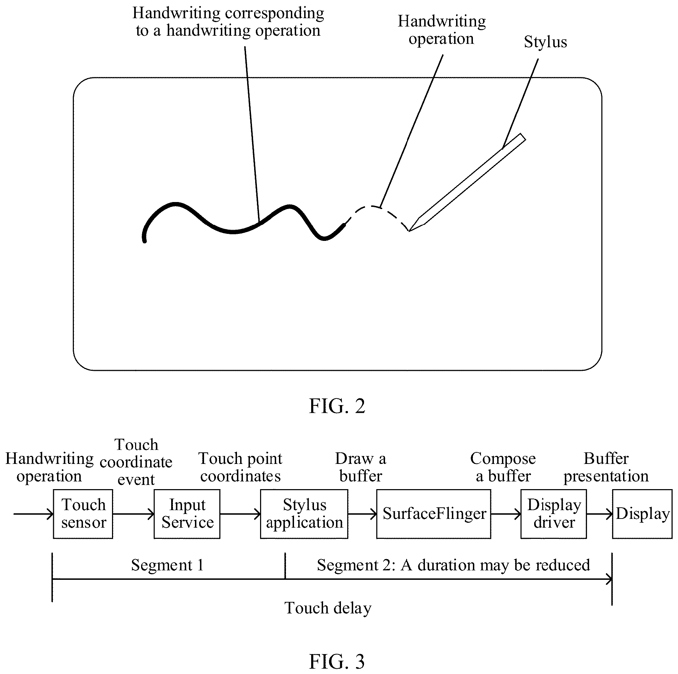

With the popularity of touch screens in electronic devices, many third-party applications provide handwriting functions. For example, a user may perform a handwriting operation on a touch screen through a finger or a stylus to trigger the electronic device to generate handwriting corresponding to the handwriting operation. An important indicator of the handwriting function includes a touch delay, that is, a time delay from a time when a user performs a handwriting operation on the touch screen to a time when handwriting is displayed in a position corresponding to the handwriting operation. For the time delay, reference may be made to a schematic diagram of a scenario shown in FIG. 2.

As shown in FIG. 2, a user holds a stylus in hand and performs a handwriting operation on a touch screen, and an electronic device generates handwriting based on the handwriting operation in a position where the handwriting operation swipes on the touch screen. Due to presence of a touch delay, the generated handwriting lags significantly behind the handwriting operation of the stylus.

The scenario shown in FIG. 2 is only an example scenario of the touch delay. In an actual application, the user may also generate the touch delay shown in FIG. 2 by performing a handwriting operation on the touch screen through a finger.

Refer to FIG. 3. FIG. 3 is a schematic diagram showing a cause of a touch delay. The touch delay is a duration from a time when the user starts a handwriting operation on the touch screen of the electronic device to a time when handwriting is displayed in a position corresponding to the handwriting operation on the touch screen.

The touch sensor may be arranged in the display screen, and the touch sensor and the display screen form a touch screen. The touch sensor may detect a touch operation performed on the touch screen and send the touch operation to a stylus application through InputService. The stylus application generally refers to any application that supports the handwriting operation.

As a service in a system, the InputService may obtain a user input and distribute the user input to a corresponding receiver. For example, some input is sent to a service for processing in an application framework layer, and some input is sent to an upper-layer application (for example, a stylus application) for processing. In this embodiment of this application, when the touch screen displays a handwriting interface of the stylus application, the handwriting operation performed on a region of the handwriting interface may be distributed as input to the stylus application.

SurfaceFlinger is configured to implement interface composition. For example, when the electronic device displays an interface through a touch screen, content in an interface displayed by the touch screen may include one or more of the following: a status bar (a bar for displaying information such as system time, battery status, signal strength, and a notification), wallpaper, background, an interface of the application, and a bottom virtual button bar (a bar for displaying a virtual back button, a virtual home button, and the like). Each of the above items is a surface object. The surface object may be cached in a buffer space as buffer data. Therefore, the surface may also be denoted as a buffer. In this embodiment of this application, a buffer space for storing a buffer drawn by the stylus application is denoted as a first buffer space. SurfaceFlinger composes the surface object corresponding to each item included in the interface. The composed content is also cached in a second buffer space as buffer data. Therefore, the composed content may also be denoted as a composed buffer.

For the stylus application, the stylus application draws a surface (denoted as a buffer of the stylus application) corresponding to the stylus application based on touch point coordinates. An application or a thread responsible for the status bar in the system draws a surface (denoted as a status bar buffer) corresponding to the status bar, and the SurfaceFlinger composes the surface of the stylus application and the surface of the status bar to obtain a composed buffer. The composed buffer is stored in the second buffer space.

The display driver is configured to retrieve the composed buffer from the second buffer space and send the composed buffer to the display screen for display.

An execution process in the electronic device corresponding to the touch delay includes: The touch sensor sends a touch coordinate event to InputService after receiving a handwriting operation. The InputService sends touch point coordinates to the stylus application after receiving the touch coordinate event. The stylus application draws a buffer based on the touch point coordinates after receiving the touch point coordinates. SurfaceFlinger obtains the buffer drawn by the stylus application and another buffer, and composes the buffer drawn by the stylus application and the another buffer. The display driver sends the composed buffer to the display screen for display.

In an example shown in FIG. 3, the touch sensor may immediately send the touch coordinate event to the InputService after receiving the handwriting operation. The InputService may immediately send touch point coordinates corresponding to the touch coordinate event to the stylus application after receiving the touch coordinate event. A delay from the handwriting operation to a time when the touch point coordinates are sent to the stylus application corresponds to a segment 1. The stylus application, the SurfaceFlinger, and the display driver all need to perform corresponding operations based on triggering of a Vsync signal. Therefore, the touch delay is mainly affected by a process of a segment 2 from a time when the stylus application starts drawing the buffer to a time when the display driver presents the composed buffer. Through this embodiment of this application, a duration of the segment 2 may be reduced.

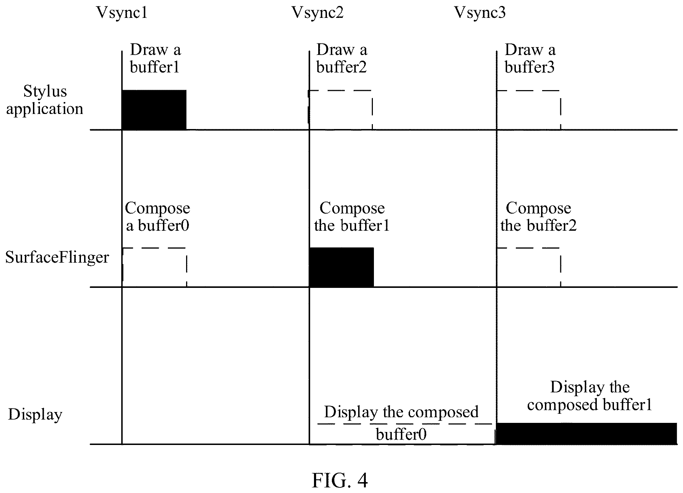

Refer to FIG. 4. FIG. 4 is a schematic diagram of the duration from a time when a stylus application starts drawing a buffer to a time when a display driver performs presentation according to an embodiment of this application.

Vsync synchronization signals in the figure mainly include a hardware Vsync signal and a software Vsync signal. The hardware Vsync signal is a TE signal that triggers the display driver to perform presentation. The software Vsync signal is a hardware Vsync signal simulated in the system, which mainly includes two types: VsyncAPP and VsyncSF. Since transmission processes of the foregoing three Vsync signals are different, a very small time difference may exist between the VsyncAPP, VsyncSF, and TE signals. In subsequent embodiments, the time difference is to be ignored. In other words, it is roughly considered that the VsyncAPP, VsyncSF, and TE signals are time-aligned, and the Vsync signals with different periods are all represented by Vsynci (where i is a natural number).

Referring to FIG. 4, the stylus application receives Vsync1 (which is actually VsyncAPP1), and then starts drawing a buffer1 of the stylus application based on received touch point coordinates (the touch point coordinates are coordinates corresponding to a handwriting operation 1). The stylus application caches the drawn buffer1 in a first buffer space after finishing drawing the buffer1. In this case, only the buffer1 exists in the first buffer space. Certainly, a drawing process in this embodiment of this application is a process in which the stylus application generates a buffer from the touch point coordinates.

SurfaceFlinger retrieves the buffer1 from the first buffer space after receiving Vsync2 (which is actually VsyncSF2), composes the buffer1 and another buffer (for example, a buffer corresponding to a status bar), and caches the composed buffer1 in a second buffer space.

The display driver sends the composed buffer1 read from the second buffer space to a display for display after receiving Vsync3 (which is actually a TE3 signal). The display displays the buffer1 sent from the display driver.

In the foregoing embodiments, only the buffer1 is used as an example in which tasks executed by the stylus application, SurfaceFlinger, and the display driver are described. In an actual application, at a moment corresponding to a Vsync signal, the stylus application, SurfaceFlinger, and the display driver may all perform tasks relative to different buffers. For details, reference may be made to the tasks shown by dashed lines in the embodiment shown in FIG. 4.

Therefore, the touch delay corresponding to the handwriting operation 1 performed by the user includes a lot of waiting time: a waiting time of the stylus application, a waiting time of SurfaceFlinger, and a waiting time of the display driver, resulting in a relatively long touch delay for the stylus application. For an application such as the stylus application that requires a relatively low delay, user experience is relatively poor.

Embodiments of this application provide an image presentation method. Through the method, a time for waiting the Vsync signal in the foregoing embodiments may be shortened, thereby shortening the touch delay of the handwriting function.

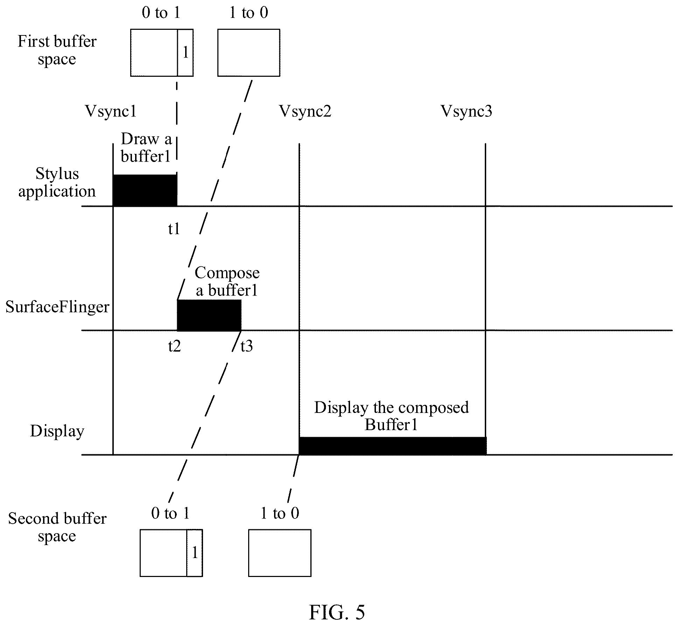

Refer to FIG. 5. FIG. 5 shows an image presentation method according to an embodiment of this application. The method may include: immediately triggering SurfaceFlinger to perform a task of buffer composition after a stylus application draws a buffer based on a Vsync signal and puts the buffer into a first buffer space; and retrieving the buffer from the first buffer space, composing the buffer and another buffer (for example, a buffer corresponding to a status bar), and putting the composed buffer into the second buffer space.

Refer to FIG. 5. FIG. 5 is a schematic diagram of a time relationship from drawing of one buffer to display of the buffer on a screen through the image presentation method according to an embodiment of this application. In the figure, only a process from drawing to presentation of a buffer1 is used as an example. Other buffers in the process are not shown in the figure.

After receiving Vsync1 (which is actually VsyncAPP1), a stylus application starts drawing a buffer1 of the stylus application based on received touch point coordinates (the touch point coordinates are coordinates corresponding to a handwriting operation 1). At a moment t1, the stylus application finishes drawing the buffer1, and the stylus application caches the drawn buffer1 in a first buffer space. In this case, a quantity of buffers in the first buffer space changes from 0 to 1, and the buffer in the first buffer space is the buffer1. Then the stylus application sends a composition instruction to SurfaceFlinger to trigger the SurfaceFlinger to perform the task of buffer composition. The composition instruction may be sent by a rendering process (draw Thread) of the stylus application.

After receiving the composition instruction, the SurfaceFlinger retrieves the buffer1 from the first buffer space, and a quantity of buffers in the first buffer space is updated from 1 to 0. The SurfaceFlinger starts to compose the buffer1 and another buffer (for example, a buffer corresponding to a status bar) at a moment t2, and the SurfaceFlinger completes the composition task of the buffer1 at a moment t3. The SurfaceFlinger caches the composed buffer1 in a second buffer space, and a quantity of composed buffers stored in the second buffer space is updated from 0 to 1. The composed buffer stored in the second buffer space is the composed buffer1. It may be understood that since after the moment t1, the stylus application needs to store the buffer1, the stylus application needs to send a composition instruction, and the SurfaceFlinger needs to retrieve the buffer1 from the first buffer space before starting the composition task of the buffer1 at the moment t2. Therefore, the moment t2 is later than the moment t1.

The display driver sends the composed buffer1 retrieved from the second buffer space to a display for display after receiving Vsync2 (which is actually a TE2 signal). The display displays the composed buffer1.

It may be understood that in the image presentation method shown in FIG. 5, it takes about one Vsync signal cycle from a time when the stylus application starts drawing the buffer1 to a time when the composed buffer1 is displayed on the display. Compared with the method shown in FIG. 4, the touch delay is shortened by about a duration of one Vsync cycle.

In the foregoing embodiments, a situation where no buffer accumulation occurs in the first buffer space and the second buffer space is used as an example. In an actual application, a situation of buffer accumulation may exist, for example, two or more than two buffers may exist in the first buffer space, and two or more than two composed buffers may also exist in the second buffer space.

If buffer accumulation exists in the first buffer space, since the stylus application draws a buffer based on a Vsync signal, the other buffers in the first buffer space except the latest buffer may be buffers for delayed processing. In view of high requirements for the touch delay of the stylus application, it may be configured that when buffer accumulation exists in the first buffer space, SurfaceFlinger retrieves only the latest buffer of the stylus application in the first buffer space and another application buffer (for example, a status bar buffer) for composition, and discards the other buffers in the first buffer space.

If buffer accumulation exists in the second buffer space, in theory, it is also possible to enable the display driver to retrieve only the latest composed buffer for presentation. However, since the buffer in the second buffer space is a composed buffer, if other composed buffers before the latest composed buffer in the second buffer space are discarded, invalid composition by the SurfaceFlinger and invalid drawing by the stylus application may be caused, resulting in a waste of system resources. Therefore, it may be configured that before the SurfaceFlinger composes the buffer, if it is found that there is still a composed buffer in the second buffer space that has not yet been retrieved and displayed on the display, the SurfaceFlinger may stop the current buffer composition task. In this way, even if buffer accumulation exists, the buffers before composition are accumulated in the first buffer space. As described above, when buffer accumulation occurs in the first buffer space, the SurfaceFlinger retrieves only the latest buffer of the stylus application for composition, and discards other buffers for delayed processing, thereby increasing a speed of image presentation and shortening the touch delay.

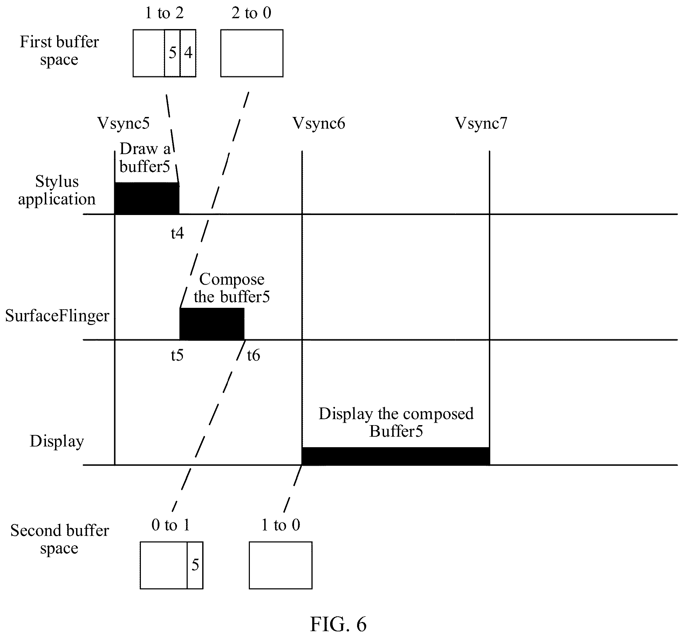

Refer to FIG. 6. FIG. 6 is a time delay relationship diagram when buffer accumulation exists in a first buffer space according to an embodiment of this application.

A stylus application starts drawing a buffer5 of the stylus application based on the received touch point coordinates after receiving Vsync5 (which is actually VsyncAPP5). At a moment t4, the stylus application completes drawing the buffer5 and obtains the buffer5. The stylus application caches the drawn buffer5 in the first buffer space. In this case, a quantity of buffers cached in the first buffer space changes from 1 to 2. A buffer4 and a buffer5 exist early and late. The stylus application sends a composition instruction to SurfaceFlinger to trigger the SurfaceFlinger to perform the task of buffer composition.

After receiving the composition instruction, the SurfaceFlinger retrieves the latest buffer5 from the first buffer space, and discards another buffer in the first buffer space, that is, the buffer4. In this case, no buffer exists in the first buffer space, and a quantity of buffers changes from 2 to 0. At a moment t5, the SurfaceFlinger starts to compose the retrieved buffer5 and another application buffer (for example, the buffer corresponding to the status bar). At a moment t6, the SurfaceFlinger completes the composition of the buffer5 and obtains the composed buffer5. The SurfaceFlinger caches the composed buffer5 in a second buffer space, and a quantity of composed buffers in the second buffer space changes from 0 to 1. The composed buffer stored in the second buffer space is the composed buffer5. The moment t5 is later than the moment t4.

The display driver retrieves the composed buffer5 from the second buffer space and sends the retrieved composed buffer to the display for display after receiving Vsync6 (which is actually a TE6 signal). The quantity of composed buffers in the second buffer space changes from 1 to 0, and the display displays the composed buffer5.

In an actual application, the SurfaceFlinger may retrieve all the buffers in the first buffer space, perform composition on the buffer5 that is stored latest, and discard the other buffers. The SurfaceFlinger may also retrieve the buffer5 that is stored latest in the first buffer space for composition, and then retrieve and discard the other buffers stored in the first buffer space.

It may be understood that if a solution shown in FIG. 6 is adopted, the composed buffer5 is to be sent to the display for display by the display driver at a moment corresponding to Vsync6.

If the solution in the native process in which SurfaceFlinger retrieves buffers in chronological order for composition is adopted, SurfaceFlinger, after receiving the composition instruction, the SurfaceFlinger retrieves the earliest buffer4 from the first buffer space in chronological order, composes the buffer4 and another application buffer (for example, the buffer corresponding to the status bar), and caches the composed buffer4 in the second buffer space. The display driver retrieves the composed buffer4 from the second buffer space and sends the composed buffer to a touch screen for display after receiving Vsync6 (which is actually a TE6 signal). By analogy, the display driver retrieves the composed buffer5 from the second buffer space and sends the composed buffer to the display for display after receiving Vsync7 (which is actually a TE7 signal). In other words, the composed buffer5 is to be sent to the display for display by the display driver at a moment corresponding to Vsync7.

Therefore, in the solution shown in FIG. 6 in which the SurfaceFlinger retrieves the latest buffer from the first buffer space for composition and discards the other buffers in the first buffer space, the touch delay may be shortened. In examples shown in FIG. 6, an example in which two buffers are accumulated is used. In an actual application, even if more than two buffers are accumulated in the first buffer space, the SurfaceFlinger retrieves the latest buffer from the first buffer space for composition and discards other buffers in the first buffer space.

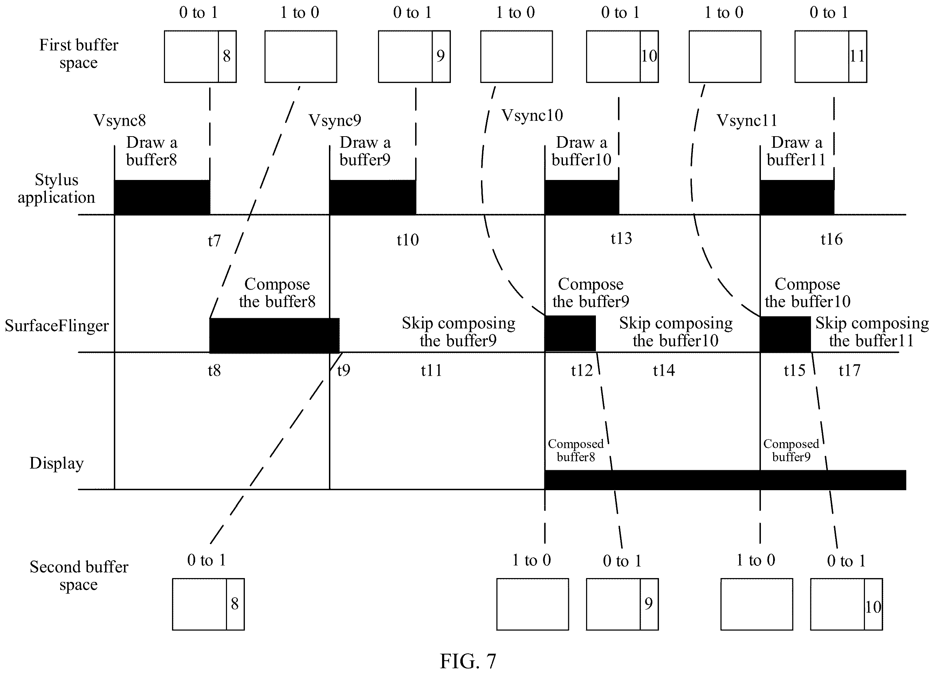

Refer to FIG. 7. FIG. 7 is a time delay relationship diagram for SurfaceFlinger to stop a current buffer composition task to avoid accumulation of composed buffers in a second buffer space according to an embodiment of this application.

After Vsync8, each module performs a task.

A stylus application starts drawing a buffer8 of the stylus application based on received touch point coordinates after receiving Vsync8 (which is actually VsyncAPP8). The stylus application completes drawing the buffer8 at a moment t7 and obtains a buffer8. The stylus application caches the buffer8 in a first buffer space. In this case, a quantity of buffers in the first buffer space changes from 0 to 1. The buffer in the first buffer space is the buffer8. The stylus application sends a composition instruction to SurfaceFlinger to trigger the SurfaceFlinger to perform the task of buffer composition.

The SurfaceFlinger retrieves the buffer8 from the first buffer space after receiving the composition instruction. The quantity of buffers in the first buffer space changes from 1 to 0. At a moment t8, the SurfaceFlinger starts to compose the retrieved buffer8 and another application buffer (for example, a buffer corresponding to a status bar). Due to system stuttering, the composition process takes a long time, and the composed buffer8 is not obtained before Vsync9 arrives. In this embodiment of this application, an example in which the SurfaceFlinger completes the composition of the buffer8 and obtains the composed buffer8 at a moment t9 (the moment t9 is later than Vsync9) is used. The SurfaceFlinger caches the composed buffer8 in the second buffer space. A quantity of composed buffers in the second buffer space changes from 0 to 1. The composed buffer stored in the second buffer space is the composed buffer8. The moment t8 is later than the moment t7.

After Vsync9, each module performs a task.

The stylus application starts drawing a buffer9 of the stylus application based on received touch point coordinates after receiving Vsync9 (which is actually VsyncAPP9). The stylus application completes drawing the buffer9 at a moment t10 and obtains the buffer9. The stylus application caches the drawn buffer9 in the first buffer space. In this case, the quantity of buffers in the first buffer space changes from 0 to 1. The buffer stored in the first buffer space is the buffer9. The stylus application sends a composition instruction to SurfaceFlinger to trigger the SurfaceFlinger to perform the task of buffer composition.

After the SurfaceFlinger receives Vsync9 (which is actually VsyncSF9), since no buffer exists in the first buffer space (in the figure, it may be understood that the quantity of buffers in the first buffer space is 0 from the moment t8 to the moment t10), the SurfaceFlinger does not perform the task of composition based on Vsync9.

After receiving the composition instruction sent by the stylus application, in theory, the SurfaceFlinger should retrieve the buffer9 from the first buffer space and start to compose the buffer9 at a moment t11. However, after receiving the composition instruction sent by the stylus application, the SurfaceFlinger finds that there is the buffer8 in the second buffer space that has not been presented. Therefore, the current task of buffer composition based on the currently received composition instruction is paused.

After the display driver receives Vsync9 (which is actually a TE9 signal), since Vsync9 is earlier than the moment t9, no composed buffer exists in the second buffer space. Therefore, a task of presentation does not need to be performed.

After Vsync10, each module performs a task.

The stylus application starts drawing a buffer10 of the stylus application based on the received touch point coordinates after receiving Vsync10 (which is actually VsyncAPP10).

The SurfaceFlinger retrieves the buffer9 from the first buffer space after receiving Vsync10 (which is actually VsyncSF10), and starts to composes the retrieved buffer9 and another application buffer (for example, a status bar buffer).

The display driver sends the composed buffer8 retrieved from the second buffer space to the display for display after receiving Vsync10 (which is actually TE10). A quantity of composed buffers stored in the second buffer space changes from 1 to 0, and the display displays the composed buffer8.

In an actual application, the display driver usually retrieves the composed buffer in the second buffer space at a moment earlier than the Vsync signal, and sends the read composed buffer to a screen for display at a moment corresponding to the Vsync signal. Therefore, after receiving Vsync10, the SurfaceFlinger determines that no buffer that is not displayed exists in the second buffer. Therefore, the SurfaceFlinger may perform a task of composing the buffer9.

At a moment t13, the stylus application completes the task of drawing a buffer10 and obtains the buffer10. After the stylus application stores the buffer10 in the first buffer space, a quantity of buffers stored in the first buffer space changes from 0 to 1. The buffer stored in the first buffer space is the buffer10. The stylus application sends a composition instruction to the SurfaceFlinger.

If t12 is earlier than t13, the task performed by the SurfaceFlinger is as follows:

At a moment t12, the SurfaceFlinger completes the composition task of the buffer9 and obtains the composed buffer9, and stores the composed buffer9 in the second buffer space. A quantity of composed buffers in the second buffer space is updated from 0 to 1. The composed buffer stored in the second buffer space is the composed buffer9.

At a moment t13, after receiving the composition instruction, the SurfaceFlinger determines that a buffer9 still exists in the second buffer space and has not yet been retrieved and sent to the display for display. Therefore, the SurfaceFlinger stops the current task of buffer composition. In other words, the task of composing the buffer10 that was supposed to start at a moment t14 is stopped. t14 is later than t13.

If t12 is later than t13, the task performed by the SurfaceFlinger is as follows:

At the moment t13, after receiving the composition, the SurfaceFlinger needs to wait until the moment t12 because the current composition task of the buffer9 has not yet been completed. The SurfaceFlinger completes the composition task of the buffer9 and obtains the composed buffer9, and stores the composed buffer9 in the second buffer space. A quantity of composed buffers in the second buffer space is updated from 0 to 1. The composed buffer stored in the second buffer space is the composed buffer9.

The SurfaceFlinger continues to respond to the composition instruction sent by the stylus application. However, since the buffer9 still exists in the second buffer space and has not yet been retrieved and sent to the display for display, the SurfaceFlinger stops the current task of buffer composition. In other words, the task of composing the buffer10 that was supposed to start at a moment t14 is stopped. t14 is later than t13.

Therefore, a time order between the t12 and the t13 is not limited.

The task performed by each module after Vsyncll is similar to that performed by each module after Vsync10. Subsequent tasks may continue to be performed based on the task performed by each module after Vsync10.

The stylus application starts drawing a buffer11 of the stylus application based on received touch point coordinates after receiving Vsync11 (which is actually VsyncAPP11).

After the SurfaceFlinger receives Vsync11 (which is actually VsyncSF11), the SurfaceFlinger retrieves the buffer10 from the first buffer space, and starts to compose the retrieved buffer10 and a buffer (for example, a status bar buffer) of another application.

After receiving Vsync11 (which is actually TE11), the display driver sends the composed buffer9 retrieved from the second buffer space to the display for display. The display displays the composed buffer9.

In an actual application, the display driver usually retrieves the composed buffer in the second buffer space at a moment earlier than the Vsync signal, and sends the read composed buffer to a screen for display at a moment corresponding to the Vsync signal. Therefore, after receiving Vsync11, the SurfaceFlinger determines that no buffer that is not displayed exists in the second buffer. Therefore, the SurfaceFlinger may perform a task of composing the buffer10.

At a moment t16, the stylus application completes the task of drawing a buffer1 1 and obtains the buffer11. After the stylus application stores the buffer11 in the first buffer space, a quantity of buffers stored in the first buffer space changes from 0 to 1. The buffer stored in the first buffer space is the buffer11. The stylus application sends a composition instruction to the SurfaceFlinger.

An example in which t15 is earlier than t16 is used. The task performed by the SurfaceFlinger is as follows.

At a moment t15, the SurfaceFlinger completes the composition task of the buffer10 and obtains the composed buffer10, and stores the composed buffer10 in the second buffer space. A quantity of composed buffers in the second buffer space is updated from 0 to 1. The composed buffer stored in the second buffer space is the composed buffer10.

At a moment t16, after receiving the composition, the SurfaceFlinger determines that a buffer10 still exists in the second buffer space and has not yet been retrieved and sent to the display for display. Therefore, the SurfaceFlinger stops the current task of buffer composition. In other words, the task of composing the buffer11 that was supposed to start at a moment t17 is stopped. t17 is later than t16.

In a case that t15 is later than t17, details are not described again. For details, reference may be made to the task description in the previous Vsync signal cycle.

It may be understood through the foregoing process that it also needs to take about two Vsync signal cycles from a time when a buffer8 starts to be drawn to a time for presentation. Correspondingly, the subsequent buffer9 and buffer10 may also require about two Vsync signal cycles from drawing to presentation.

In the embodiment shown in FIG. 7, to avoid accumulation of composed buffers in the second buffer space, it is configured that: after receiving a composition instruction sent by the stylus application, the SurfaceFlinger determines that there is a buffer in the second buffer space that has not been sent to the display for display, and the SurfaceFlinger stops the process of composing a buffer based on the current composition instruction. In addition, considering a possibility of buffer accumulation in the first buffer space, it is further configured that the SurfaceFlinger always retrieves the latest drawn buffer from the first buffer space and discards other buffers in the first buffer space. However, in theory, the buffer (for example, the buffer9) that should have been accumulated in the first buffer space is composed by the SurfaceFlinger instead after Vsync10 arrives. Therefore, the SurfaceFlinger subsequently performs buffer composition upon receiving the Vsync signal, rather than performs buffer composition upon receiving the composition instruction from the stylus application, and the execution is to be continued based on a process manner between Vsync 10 and Vsync 11, resulting in that it still takes about two Vsync signal cycles for each buffer from drawing to displaying in the embodiment shown in FIG. 4.

To solve the problem, it may be configured that: every time the SurfaceFlinger receives a composition instruction, in a case that a composed buffer that has not been presented further exists in the second buffer space, the current buffer composition process is stopped, and a VsyncSF signal is disabled once. In this way, the manner shown in FIG. 6 may be adopted, and the manner shown in FIG. 5 is subsequently adopted.

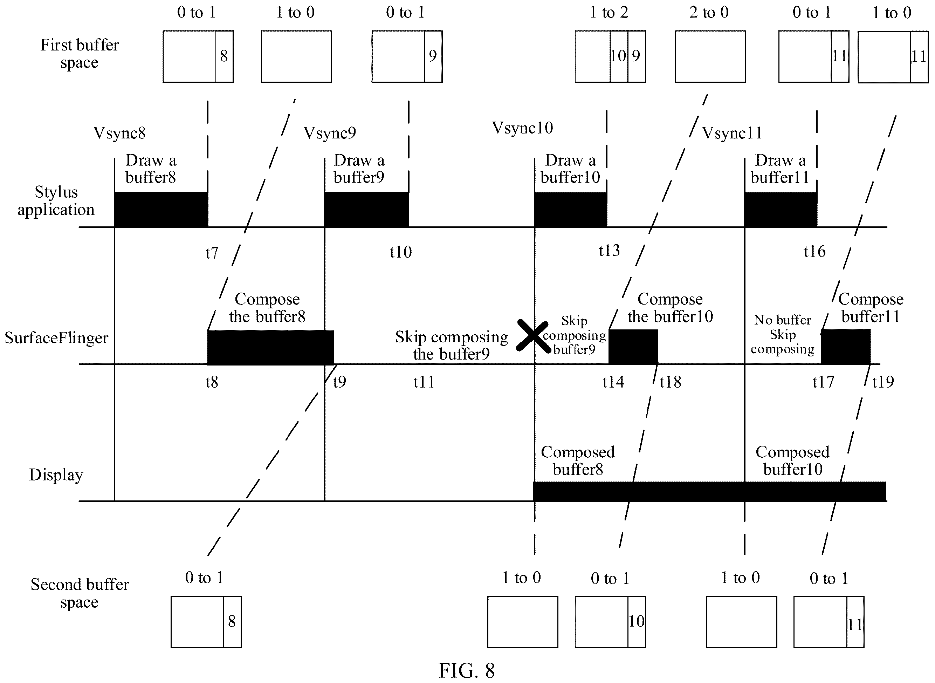

Refer to FIG. 8. FIG. 8 is a time delay relationship diagram when SurfaceFlinger stops a current buffer composition task and disables one VsyncSF signal once in a case that a composed buffer that has not yet been presented further exists in a second buffer space according to an embodiment of this application.

After Vsync8 and Vsync9, the task performed by each module is the same as that in the embodiment shown in FIG. 7. For details, reference may be made to the description in the embodiment shown in FIG. 7.

After Vsync10, the stylus application starts drawing a buffer10 of the stylus application based on received touch point coordinates after receiving Vsync10 (which is actually VsyncAPP10).

The SurfaceFlinger cannot receive Vsync10 (which is actually VsyncSF10), or can receive Vsync10 (which is actually VsyncSF 10) but does not respond to Vsync10 (which is actually VsyncSF10). Therefore, a quantity of buffers in the first buffer space remains 1, and the stored buffer is the buffer9.

The display driver sends the composed buffer8 retrieved from the second buffer space to the display for display after receiving Vsync10 (which is actually TE10). A quantity of composed buffers stored in the second buffer space changes from 1 to 0, and the display displays the composed buffer8.

At a moment t13, the stylus application completes the task of drawing a buffer10 and obtains the buffer10. After the stylus application stores the buffer10 in the first buffer space, a quantity of buffers stored in the first buffer space changes from 1 to 2. The buffer stored in the first buffer space is the buffer9 and the buffer10. The stylus application sends a composition instruction to the SurfaceFlinger.

After receiving the composition instruction sent by the stylus application, the SurfaceFlinger determines that no composed buffer that has not yet been presented exists in the second buffer space. Therefore, the current task of buffer composition may be performed. The SurfaceFlinger retrieves the latest buffer10 from the first buffer space and discards the buffer9. A quantity of buffers stored in the first buffer space changes from 2 to 0. At a moment t14, the SurfaceFlinger starts to perform the composition task of the buffer10.

At a moment t18, the SurfaceFlinger completes the composition task of the buffer10 and obtains the composed buffer10, and stores the composed buffer10 in the second buffer space. A quantity of buffers stored in the second buffer space is updated from 0 to 1. The composed buffer stored in the second buffer space is the buffer10.

The task performed by each module after Vsync11 is similar to that performed by each module after Vsync10. Subsequent tasks may continue to be performed based on the task performed by each module after Vsync10.

The stylus application starts drawing a buffer11 of the stylus application based on received touch point coordinates after receiving Vsync11 (which is actually VsyncAPP11).

The SurfaceFlinger finds no buffer in the first buffer space after receiving Vsync11 (which is actually VsyncSF11), and does not perform the buffer composition task.

The display driver sends the composed buffer10 retrieved from the second buffer space to the display for display after receiving Vsync11 (which is actually TE11). A quantity of composed buffers stored in the second buffer space changes from 1 to 0, and the display displays the composed buffer10.

At a moment t16, the stylus application completes the task of drawing a buffer11 and obtains the buffer11. After the stylus application stores the buffer11 in the first buffer space, a quantity of buffers stored in the first buffer space changes from 0 to 1. The buffer stored in the first buffer space is the buffer11. The stylus application sends a composition instruction to the SurfaceFlinger.

After receiving the composition instruction sent by the stylus application, the SurfaceFlinger determines that no composed buffer that has not yet been presented exists in the second buffer space. Therefore, the current task of buffer composition may be performed. The SurfaceFlinger retrieves the buffer1 1 from the first buffer space. The quantity of buffers stored in the first buffer space changes from 1 to 0. At a moment t17, the SurfaceFlinger starts to perform the composition task of the buffer11.

At a moment t19, the SurfaceFlinger completes the composition task of the buffer11 and obtains the composed buffer11, and stores the composed buffer11 in the second buffer space. A quantity of buffers stored in the second buffer space is updated from 0 to 1. The composed buffer stored in the second buffer space is the buffer11.

In the foregoing embodiments, at the moment t14, the buffer composed by SurfaceFlinger is the buffer10 that is stored latest in the first buffer space, and the discarded buffer is the buffer9. In an actual application, the buffer9 may alternatively be composed, and the buffer10 discarded. The difference is that: at the moment of Vsync11, the display driver sends the composed buffer9 to the display for display, but from a moment corresponding to a next Vsync12 signal, the buffer11 is displayed again. Therefore, a touch delay of a segment from drawing to displaying of each subsequent buffer is also shortened.

In the foregoing embodiments, only an example in which two buffers are accumulated is used. In an actual application, a case where a plurality of buffers are accumulated may occur. A quantity of accumulated buffers is not limited in this application.

In this manner, although it takes the buffer8 about two Vsync cycles from the beginning of drawing to being sent to the display for display, after one VsyncSF10 or a response to VsyncSF10 is stopped, each internal module resumes to perform the execution process shown in FIG. 6 and FIG. 5. In other words, after the subsequent buffer9 is discarded, it takes about 1 Vsync cycle from a time when the stylus application starts drawing the buffer10 and the buffer10 to a time when the buffers are sent to the screen for display, thereby shortening the touch delay.

In the foregoing examples, the SurfaceFlinger retrieves the latest buffer (for example, the buffer10) and discards an old accumulated buffer (for example, the buffer9) when composing the buffer in the first buffer space, which may result in a lack of handwriting corresponding to the discarded buffer (for example, the buffer9). However, for a scenario of a stylus, handwriting is triggered by a gesture operation of a user. A cycle of a Vsync signal is about 8.3 ms (a 120Hz refresh rate) or 16.7 ms (a 60Hz refresh rate). A distance for a finger of the user to move within one Vsync signal cycle is very small. Therefore, the lack of handwriting is hardly noticeable in the generated handwriting. Therefore, through the image presentation method provided in embodiments of this application, the touch delay is reduced without causing note loss in user experience.

In another embodiment of this application, since the stylus application may send a composition instruction to the SurfaceFlinger to trigger the SurfaceFlinger to compose the buffer, it is also possible to configure that once the stylus application is started (for example, the stylus application is running in the foreground and a handwriting interface the stylus application is displayed), subsequent VsyncSF signals are disabled, or the SurfaceFlinger no longer responds to the VsyncSF signal.

In the foregoing embodiments, a stylus application scenario is used as an example. However, it may be understood from the foregoing embodiments that a shortened time in embodiments of this application is a period of time from a time when buffer data starts to be drawn to a time when the buffer data is sent to the display for display. In a screen-on state of an electronic device, each internal module of the electronic device continuously performs tasks of drawing, composition, and presentation. Therefore, embodiments of this application not only are applicable to the stylus application scenario provided in the foregoing embodiments but also applicable to a scenario where another application is running in the foreground and displayed. Those are not described through examples one by one in this application.

In addition, in the foregoing embodiments, i in Vsynci in different embodiments (or accompanying drawings) does not necessarily mean that a time sequence exists, and the i in time-related Vsynci in an embodiment (or an accompanying drawing) means that a time sequence exists. For example, in a same embodiment (or an accompanying drawing), a time of Vsync(i+1) is later than that of Vsynci. Vsync(i+1) and Vsynci in different embodiments (or accompanying drawings) do not have a unique time sequence. Similarly, i in ti in different embodiments (or figures) does not necessarily mean that a time sequence exists, and time-related ti in an embodiment (or an accompanying drawing) indicates a time from early to late from left to right in the accompanying drawing.

An embodiment shown in FIG. 8 is used as an example. Continuous and uninterrupted Vsync signals include: Vsync8, Vsync9, Vsync10, and Vsync11. From Vsync8 to Vsync9 is a Vsync signal cycle, from Vsync9 to Vsync10 is a Vsync signal cycle, and from Vsync10 to Vsync11 is a Vsync signal cycle. The Vsync signals adjacent to Vsync9 are Vsync8 and Vsync10. In other words, a time difference between the Vsync signal adjacent to the Vsynci signal and the Vsynci signal is one Vsync signal cycle.

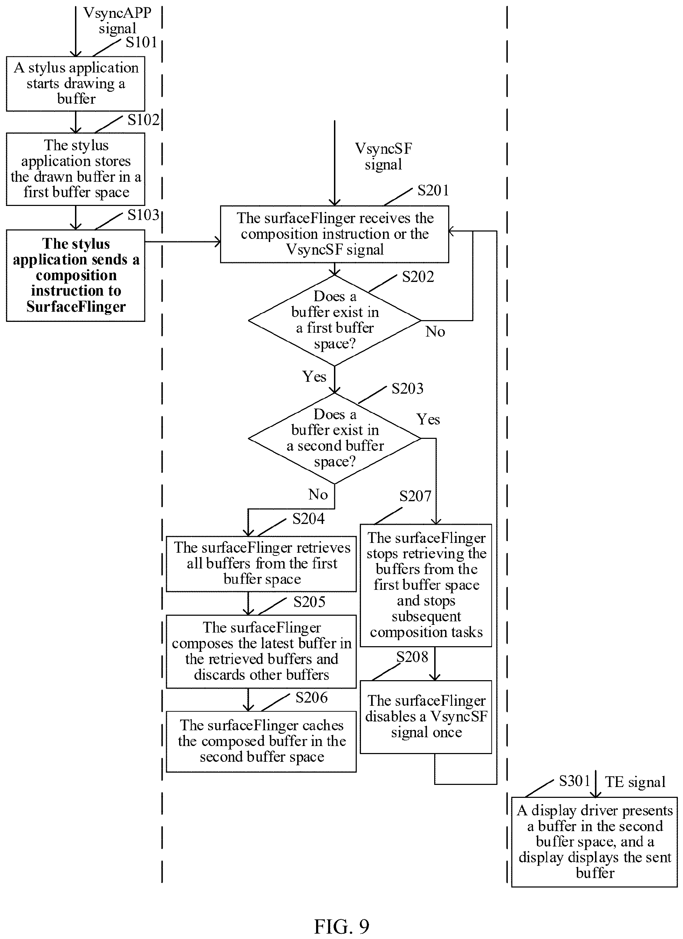

Refer to FIG. 9. FIG. 9 is a schematic flowchart from a perspective of a process performed by each module according to an embodiment of this application.

A stylus application may perform step S101 to step S103.

S101: After the stylus application receives a VsyncAPP signal, the stylus application starts drawing a buffer.

S102: The stylus application stores the drawn buffer in a first buffer space.

S103: The stylus application sends a composition instruction to SurfaceFlinger.

The SurfaceFlinger may perform step S201 to step S208.

S201: The SurfaceFlinger receives a composition instruction sent by a stylus application or receives a VsyncSF signal.

In this embodiment of this application, the SurfaceFlinger may receive the composition instruction sent by the stylus application, or may receive the VsyncSF signal.

S202: After receiving the composition instruction or the VsyncSF signal, the SurfaceFlinger determines whether a buffer exists in a first buffer storage space.

If no buffer exists in the first buffer storage space, the SurfaceFlinger continues to wait to receive the composition instruction sent by the stylus application or receive the VsyncSF signal.

S203: If a buffer exists in the first buffer storage space, it is determined whether a buffer exists in a second buffer storage space.

S204: If it is determined in S203 that no buffer exists in the second buffer space, the SurfaceFlinger retrieves all buffers from the first buffer space.

S205: The SurfaceFlinger composes the latest buffer in the retrieved buffers and discards other buffers.

S206: The SurfaceFlinger caches the composed buffer in a second buffer space.

S207: If it is determined in S203 that a buffer exists in the second buffer space, the SurfaceFlinger stops retrieving a buffer from the first buffer space and stops the subsequent composition task.

S208: The SurfaceFlinger disables a next VsyncSF signal (that is, disables a VsyncSF signal once) and continues to wait to receive the composition instruction sent by the stylus application or the VsyncSF signal.

A display driver may perform step S301.

S301: The display driver sends a buffer in a second buffer space to a display for display after receiving a TE signal.

In another embodiment of this application, an image presentation method includes:

A first application receives a first Vsync signal.

The first application draws a first buffer in response to the first Vsync signal.

After the first application completes drawing the first buffer, the first application stores the first buffer in a first storage space, and the first application sends a first composition instruction to SurfaceFlinger.

The SurfaceFlinger retrieves a second buffer from the first storage space in response to the first composition instruction.

The SurfaceFlinger composes the second buffer.

A display driver receives a second Vsync signal.

The display driver sends the second buffer to a display in response to the second Vsync signal. The second Vsync signal and the first Vsync signal are two adjacent Vsync signals, and the second Vsync signal is later than the first Vsync signal.

In this application, through a manner of sending a composition instruction to the SurfaceFlinger after the first application completes drawing the buffer, the SurfaceFlinger does not need to wait until the next Vsync signal arrives before performing buffer composition, thereby shortening a duration from drawing to composition (or presentation) of the buffer. This may reduce the touch delay in a stylus application when applied to an application with a handwriting function.

In addition, during the image presentation, the buffer drawn by the first application may be an image frame. In other words, the first buffer and the second buffer in this application may be a first image frame and a second image frame.

In another embodiment of this application, the first buffer and the second buffer are a same buffer.

For the embodiment, reference may be made to the embodiment shown in FIG. 5, where the first buffer and the second buffer may be the same buffer, for example, a buffer1. Certainly, reference may be further made to the embodiment shown in FIG. 6, for example, a buffer5. Reference may be further made to the embodiment shown in FIG. 8, for example, a buffer10. In other words, after drawing and obtaining the first buffer, the first application sends a composition instruction to SurfaceFlinger. The SurfaceFlinger may compose the buffer that has just been drawn, thereby shortening a time from drawing to composition (presentation) of the same buffer, and reducing the touch delay of the stylus application.

In addition, it should be noted that the process of composing the first buffer by the SurfaceFlinger after the first application draws the first buffer is to compose the first buffer and a buffer of another application (for example, a status bar). For convenience of description, since the composed buffer is still related to the first buffer, the image frame obtained after the SurfaceFlinger composes the first buffer may also be denoted as the first buffer. The naming of other buffers is similar.

In another embodiment of this application, in a case that the first buffer and the second buffer are the same buffer, the method further includes:

The SurfaceFlinger retrieves a third buffer from the first storage space in response to the first composition instruction, where a storage time of the third buffer in the first storage space is earlier than a storage time of the first buffer in the first storage space.

For the embodiment, reference may be made to the embodiment shown in FIG. 6. For example, the first buffer and the second buffer is a buffer5, and the third buffer is a buffer4. For the embodiment, reference may be made to the embodiment shown in FIG. 8. For example, the first buffer and the second buffer is a buffer10, and the third buffer is a buffer9.

In a case that not only the first buffer that has just been drawn is stored in the first storage space, but also a third buffer stored earlier than the first buffer is present, the SurfaceFlinger needs to retrieve the most recently stored first buffer for composition and clear the first storage space, that is, retrieve and discard the third buffer. Certainly, if another buffer is further present in the first storage space that is stored earlier than the first buffer, buffers except the first buffer need to be discarded. Such a process of discarding old buffers and composing a new buffer avoids delayed composition and presentation caused by buffer accumulation. Therefore, the touch delay maybe reduced.

In another embodiment of this application, in a case that the first buffer and the second buffer are not the same buffer, the method further includes:

The SurfaceFlinger retrieves the first buffer from the first storage space in response to the first composition instruction.

In this application, the process of composing the buffer by the SurfaceFlinger after retrieving the buffer from the first storage space may also be retrieving the buffer that is stored latest for composition and discarding other buffers. In this way, after the other buffers are discarded, the first storage space is also cleared, and the touch delay may also be reduced.

Certainly, in an actual application, if more buffers are stored in the first storage space, any one of the buffers may also be retrieved for composition, and the other buffers are discarded, so that the touch delay may also be reduced.

In another embodiment of this application, before the first application receives the first Vsync signal, the method further includes:

The first application receives a second Vsync signal, where the second Vsync signal is a previous Vsync signal of the first Vsync signal.

The first application draws the third buffer in response to the second Vsync signal.

After the first application completes drawing the third buffer, the first application stores the third buffer in the first storage space, and the first application sends a second composition instruction to the SurfaceFlinger.

In a case that a fourth buffer is stored in a second buffer space, the SurfaceFlinger skips composing the third buffer in response to the second composition instruction, and a Vsync thread stops sending a next Vsync signal to the SurfaceFlinger.

For the embodiment, reference may be made to the embodiment shown in FIG. 8. The fourth buffer may be a buffer8, the first buffer and the second buffer are a buffer10, and the third buffer is a buffer9.

In a case that there is still a buffer in the second storage space that has not been presented, the SurfaceFlinger may stop the current process of buffer composition after receiving the composition instruction, and the Vsync thread (a user sends a Vsync signal) may further stop a process of sending a Vsync signal to the SurfaceFlinger once. In this way, the buffer that may be accumulated in the second storage space may be accumulated in the first storage space, and when the first application composes the buffer, the accumulated buffers are cleared, thereby reducing the touch delay.

In another embodiment of this application, before the first application receives the first Vsync signal, the method further includes:

The first application receives a second Vsync signal.

The first application draws the third buffer in response to the second Vsync signal.

The first application stores the third buffer in the first storage space after the first application completes drawing the third buffer, and in a case that a fourth buffer is stored in a second buffer space, the first application stops sending a second composition instruction to the SurfaceFlinger this time, and a Vsync thread stops sending a next Vsync signal to the SurfaceFlinger, where the next Vsync signal of the second Vsync signal is the first Vsync signal.

In this application, in a case that the fourth buffer is stored in the second buffer space, the first application stops sending the second composition instruction to the SurfaceFlinger this time, so that the SurfaceFlinger stops a process of buffer composition once. Certainly, the Vsync thread (configured to send a Vsync signal) may further stop a process of sending a Vsync signal to the SurfaceFlinger once. In this way, the buffer that may be accumulated in the second storage space may be accumulated in the first storage space, and when the first application composes the buffer, the accumulated buffers are cleared, thereby reducing the touch delay.

In another embodiment of this application, before the first application receives the second Vsync signal, the method further includes:

The first application receives a third Vsync signal, where the third Vsync signal is a previous signal of the second Vsync signal.

The first application draws the fourth buffer in response to the third Vsync signal.

After the first application completes drawing the fourth buffer, the first application stores the fourth buffer in the first storage space, and the first application sends a third composition instruction to the SurfaceFlinger.

The SurfaceFlinger retrieves the fourth buffer from the first storage space in response to the third composition instruction.

The SurfaceFlinger composes the fourth buffer.

The SurfaceFlinger stores the fourth buffer in the second storage space after the SurfaceFlinger completes composition of the fourth buffer, where a moment when the SurfaceFlinger completes the composition of the fourth buffer is later than a moment corresponding to the second Vsync signal and earlier than a moment corresponding to the first Vsync signal.

In this application, there is a situation that may cause the buffer to accumulate in the second storage space. Since the moment when the SurfaceFlinger composes the buffer is later than the moment corresponding to the next Vsync signal and earlier than a moment corresponding to a Vsync signal after next, the buffer that may be presented through the next Vsync signal is not presented, leading to the accumulation of the buffer.

In another embodiment of this application, the first application is a stylus application.

In embodiments of this application, the handwriting operation in the stylus application has a high requirement for the touch delay, that is, the touch delay should be as low as possible. Therefore, through this application, the touch delay of the stylus application may be shortened by approximately 1 Vsync signal cycle, thereby improving user experience.

It should be noted that in embodiments of this application, terms such as "first", "second", and "third" are used to represent different buffers, different Vsync signals, different composition instructions, and the like. Unless otherwise specified, the terms may represent the same buffer.

It should be understood that the sequence numbers of the steps in the above embodiments do not mean the order of execution, and the order of execution of each process should be determined by its function and internal logic, and should not constitute any limitation on the implementation process of embodiments of this application.

An embodiment of this application further provides a computer-readable storage medium. The computer-readable storage medium stores a computer program, and the computer program, when run on an electronic device, may implement the steps in the foregoing method embodiments.

An embodiment of this application further provides a computer program product, where the computer program product, when run on an electronic device or a wireless router, enables the electronic device to implement the steps in the foregoing method embodiments.

When the integrated unit is implemented in the form of a software functional unit and sold or used as an independent product, the integrated unit may be stored in a computer-readable storage medium. Based on this understanding, all or some of the processes in the method of the foregoing embodiments may be implemented by a computer program instructing relevant hardware in this application. The computer program may be stored in a computer-readable storage medium. When the computer program is executed by a processor, the steps of the foregoing method embodiments may be implemented. The computer program includes computer program code. The computer program code may be in the form of source code, object code, and an executable file, some intermediate forms, or the like. The computer-readable medium may include at least any entity or apparatus that can carry computer program code to a first device, a recording medium, a computer memory, a read-only memory (ROM, Read-Only Memory), a random access memory (RAM, Random Access Memory), an electrical carrier signal, a telecommunication signal, and a software distribution medium, for example, a USB flash disk, a mobile hard disk, a magnetic disk, or an optical disk. In some jurisdictions, according to legislation and patent practice, the computer-readable medium may not be an electrical carrier signal and a telecommunication signal.

An embodiment of this application further provides a chip, where the chip includes a processor, the processor is coupled to a memory, and the processor is configured to invoke a computer program stored in the memory, to implement the steps in any one of the method embodiments of this application. The chip may be a single chip or a chip module composed of a plurality of chips.

In the foregoing embodiments, the descriptions of various embodiments have respective focuses. For a part that is not described in detail or recorded in an embodiment, reference may be made to related descriptions in other embodiments.

A person of ordinary skill in the art may be aware that, with reference to the examples described in embodiments disclosed in this specification, units and method steps can be implemented by electronic hardware or a combination of computer software and electronic hardware. Whether the functions are executed by hardware or software depends on specific applications and design constraint conditions of the technical solutions. A person skilled in the art may use different methods to implement the described functions for each particular application, but it is not considered that such implementation goes beyond the scope of this application.

The foregoing embodiments are merely used for describing the technical solutions of this application, and are not intended to limit this application. Although this application is described in detail with reference to the foregoing embodiments, it should be appreciated by a person skilled in the art that modifications may still be made to the technical solutions described in the foregoing embodiments, or equivalent replacements may be made to the part of the technical features. However, the modifications or replacements do not make the essence of the corresponding technical solutions depart from the spirit and scope of the technical solutions of embodiments of this application, and shall fall within the protection scope of this application.

## Claims

1. An image presentation method, comprising:
receiving, by a first application, a first Vsync signal;
drawing, by the first application, a first buffer in response to the first Vsync signal;
storing, by the first application after the first application completes drawing the first buffer, the first buffer in a first storage space, and sending, by the first application, a first composition instruction to SurfaceFlinger;
retrieving, by the SurfaceFlinger, a second buffer from the first storage space in response to the first composition instruction;
composing, by the SurfaceFlinger, the second buffer;
receiving, by a display driver, a second Vsync signal; and
sending, by the display driver, the second buffer to a display in response to the second Vsync signal, wherein the second Vsync signal and the first Vsync signal are two adjacent Vsync signals, and the second Vsync signal is later than the first Vsync signal.

2. The method according to claim 1, wherein the first buffer and the second buffer are a same buffer.

3. The method according to claim 2, further comprising:
retrieving, by the SurfaceFlinger, a third buffer from the first storage space in response to the first composition instruction, wherein a storage time of the third buffer in the first storage space is earlier than a storage time of the first buffer in the first storage space.

4. The method according to claim 1, wherein the first buffer and the second buffer are not a same buffer, and the method further comprises:
retrieving, by the SurfaceFlinger, the first buffer from the first storage space in response to the first composition instruction.

5. The method according to claim 3, wherein before the first application receives the first Vsync signal, the method further comprises:
receiving, by the first application, a second Vsync signal, wherein the second Vsync signal is a previous Vsync signal of the first Vsync signal;
drawing, by the first application, the third buffer in response to the second Vsync signal;
storing, by the first application after the first application completes drawing the third buffer, the third buffer in the first storage space, and sending, by the first application, a second composition instruction to the SurfaceFlinger; and
skipping composing, by the SurfaceFlinger in a case that a fourth buffer is stored in a second storage space, the third buffer in response to the second composition instruction, and stopping sending, by a Vsync thread, a next Vsync signal to the SurfaceFlinger.

6. The method according to claim 3, wherein before the first application receives the first Vsync signal, the method further comprises:
receiving, by the first application, a second Vsync signal;
drawing, by the first application, the third buffer in response to the second Vsync signal; and
storing, by the first application, the third buffer in the first storage space after the first application completes drawing the third buffer, and in a case that a fourth buffer is stored in the second storage space, stopping sending, by the first application, a second composition instruction to the SurfaceFlinger this time, and stopping sending, by a Vsync thread, a next Vsync signal to the SurfaceFlinger, wherein the next Vsync signal of the second Vsync signal is the first Vsync signal.

7. The method according to claim 5 or 6, wherein before the first application receives the second Vsync signal, the method further comprises:
receiving, by the first application, a third Vsync signal, wherein the third Vsync signal is a previous signal of the second Vsync signal;
drawing, by the first application, the fourth buffer in response to the third Vsync signal;
storing, by the first application after the first application completes drawing the fourth buffer, the fourth buffer in the first storage space, and sending, by the first application, a third composition instruction to the SurfaceFlinger;
retrieving, by the SurfaceFlinger, the fourth buffer from the first storage space in response to the third composition instruction;
composing, by the SurfaceFlinger, the fourth buffer; and
storing, by the SurfaceFlinger, the fourth buffer in the second storage space after the SurfaceFlinger completes composition of the fourth buffer, wherein a moment when the SurfaceFlinger completes the composition of the fourth buffer is later than a moment corresponding to the second Vsync signal and earlier than a moment corresponding to the first Vsync signal.

8. The method according to claim 1, wherein the first application is a stylus application.

9. An electronic device, comprising a processor, wherein the processor is configured to invoke a computer program in a memory to perform the method according to any one of claims 1 to 8.

10. A computer-readable storage medium, storing a computer instruction, wherein the computer instruction, when run on an electronic device, causes the electronic device to perform the method according to any one of claims 1 to 8.

11. A chip, comprising a processor, wherein the processor is configured to invoke a computer program in a memory to perform the method according to any one of claims 1 to 8.
